# EUROPEAN PATENT SPECIFICATION

(11) **EP 1 974 963 B1**
(45) Date of publication and mention of the grant of the patent: **07.07.2010**
(21) Application number: 08153206.1
(22) Date of filing: 25.03.2008
(51) Int. Cl.: B60D 1/46

(54) **Towing device for agricultural or industrial vehicle**
Schleppvorrichtung für ein landwirtschaftliches oder industrielles Fahrzeug
Dispositif de dépannage pour véhicule agricole ou industriel

(30) Priority: 29.03.2007 IT MO20070108
(43) Date of publication of application: 01.10.2008
(73) Proprietor: CBM S.p.A., 41100 Modena (IT)
(72) Inventor: Cornia, Enrico Maria, 41100, MODENA (IT)
(74) Representative: Modiano, Micaela Nadia

(56) References cited:
- EP-A- 1 640 190
- EP-A- 1 867 500
- GB-A- 2 380 720
- GB-A- 2 429 195

## Description

The present invention relates to a towing device for an agricultural or industrial vehicle.

Towing devices for agricultural or industrial vehicles, conventionally known as pick-up hitches, are generally constituted by a fixed frame, which can be associated with the towing vehicle, and a lower frame, which is connected to the fixed frame and can move with respect to it.

Known towing devices can be provided according to different types of construction.

In a first type of construction, the lower frame, connected to the fixed frame for example by means of an articulated quadrilateral, has one degree of freedom with respect to the fixed frame.

At one end of the lower frame there is a hitching element, for example having a substantially spherical shape, which is adapted to engage an engagement portion of a vehicle to be towed.

The movement of the lower frame in the stroke toward and away from the fixed frame is suitable respectively to position the hitching element at the engagement portion, at a lower level, and to return it, after performing mating with said engagement portion, to the initial towing configuration, in which the lower frame is locked with respect to the fixed frame by locking means.

In a second known type, the lower frame is hinged to the fixed frame and the towing device comprises an extractable portion which is associated with the lower frame by means of a slider.

The hitching element, arranged at a peripheral region of the extractable portion, therefore has two degrees of freedom with respect to the fixed frame.

The hitching and towing of the engagement portion of the vehicle to be towed are performed by turning the lower frame with respect to the fixed frame and by extracting or retracting the extractable portion with respect to the lower frame.

In order to avoid, during towing, the accidental rotation of the lower frame with respect to the fixed frame and the risk of breakage of the components involved, the towing device is provided, in this constructive solution as well, with means for locking the lower frame. Such locking means are activated when the lower frame reaches the final point of the stroke for approaching the fixed frame and can be deactivated to allow the rotation of the lower frame in order to position the hitching element or disengage it from the engagement portion of the vehicle to be towed.

In order to avoid, during use, the accidental disengagement of the engagement portion mated with the hitching element, in particular if the latter has a substantially spherical configuration, the towing device must be provided with a retention element which is adapted to cooperate with the hitching element in order to retain the engagement portion.

A towing device which comprises a retention element which is suitable to retain, during the towing step, the engagement portion on the hitching element is known from EP-1216856B1 and from EP-1437241A1.

EP-1216856B1 and EP-1437241A1 disclose a towing device which falls within the second described type of known devices and in which the retention element is associated with the fixed frame and positioned so as to face said hitching element in the towing configuration, i.e., with the extractable portion in the retracted configuration with respect to the lower frame and said lower frame in a position which is closed and aligned with respect to the fixed frame, the engagement portion being interposed between the hitching element and the retention element.

The locking means, suitable to lock the lower frame with respect to the fixed frame, are generally constituted by hooks which are suitable to engage the lower frame at the end of its stroke toward the fixed frame.

As described above, in order to pass to a configuration for positioning the hitching element or for releasing the engagement portion, it is necessary to disengage the locking means from the lower frame.

This operation can be performed by making the lower frame perform an overtravel toward the fixed frame.

In order to allow this movement, the retention element, which otherwise would lock the movement of the lower frame in the described direction, is provided with a system for recovering the overtravel, i.e., such as to follow the movement of the lower frame in performing the overtravel.

In this manner, the retention element is pushed by the hitching element, by means of the resting of the interposed engagement portion, in its movement toward the fixed frame.

These known types of towing device are not free from drawbacks, which include the fact that the system for recovering the overtravel entails a misalignment and a loss of the position of the retention element with respect to the hitching element following the overtravel performed by the lower frame, with a consequent increase in the plays that occur between the retention element and the hitching element. This loss of position entails an increase and an irregular distribution of the stresses on the elements in contact, particularly on the retention element, and accordingly an uneven wear thereof.

This drawback further entails a reduced effectiveness of the retention action performed by the retention element, with the consequent risk of an accidental separation of the engagement portion of the towed vehicle.

Another drawback of known devices is that the engagement portion of the vehicle to be towed might disengage from the hitching element during the stroke of the lower frame toward the fixed frame, since it is not retained by the retention element in this step.

Drawbar coupling systems with retaining elements are known from EP 1 640 190 (disclosing a towing device according to the preamble of claim 1) and GB 2 429 195.

The aim of the present invention is to eliminate the above mentioned drawbacks of the background art, by providing a towing device which ensures that the retention element maintains its position with respect to the hitching element following the overtravel performed by the lower frame.

Within this aim, an object of the present invention is to allow a uniform distribution of the stresses that act on the retention element so as to avoid the formation of more worn regions which can cause uneven vibrations and stresses.

Another object of the present invention is to allow to retain the engagement portion of the towed vehicle also during the stroke of the lower frame toward the fixed frame.

Another object of the present invention is to provide a towing device having a structure which is simple, relatively easy to provide in practice, safe in use, effective in operation, and has a relatively low cost.

This aim and these and other objects which will become better apparent hereinafter are achieved by the present towing device for an agricultural or industrial vehicle, according to the present invention, that has the features set forth in claim 1.

Further characteristics and advantages of the present invention will become better apparent from the following detailed description of a preferred but not exclusive embodiment of a towing device for an agricultural or industrial vehicle, illustrated by way of non-limiting example in the accompanying drawings, wherein:

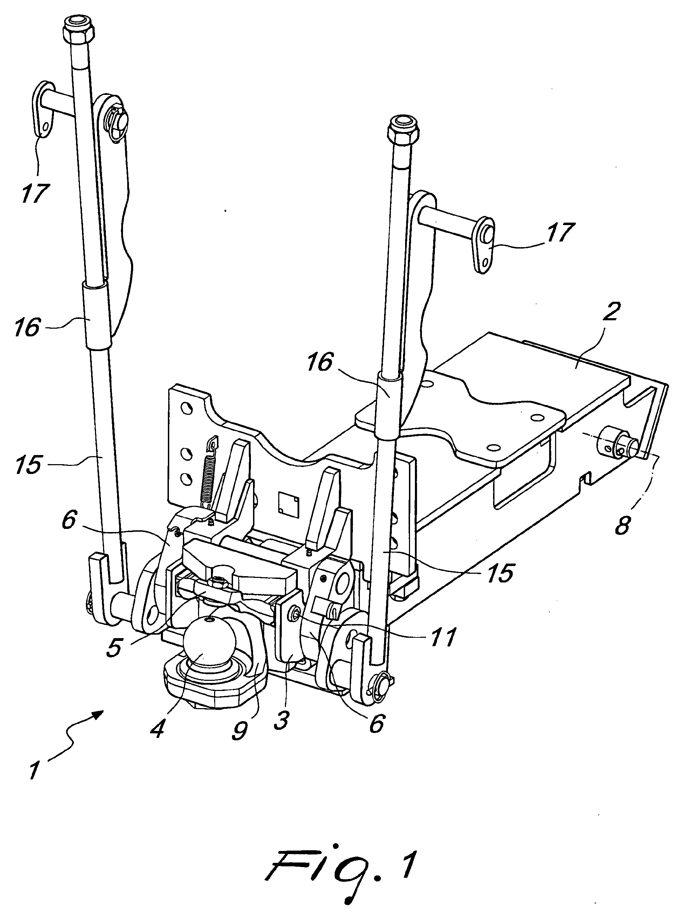

Figure 1 is a perspective view of the device according to the invention, with the lower frame in the active configuration and the extractable portion in the retracted configuration;

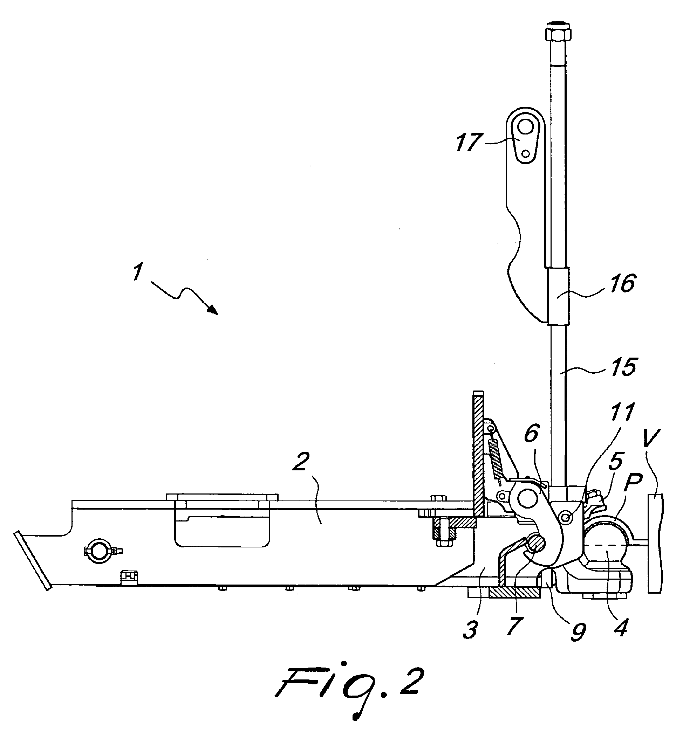

Figure 2 is a side view of the device of Figure 1;
Figure 3 is a perspective view of the device according to the invention with the lower frame in a positioning configuration and the extractable portion in the retracted configuration;
Figure 4 is a side view of the device of Figure 3;
Figure 5 is a perspective view of the device according to the invention with the lower frame in a positioning configuration and the extractable portion in an extracted configuration;
Figure 6 is a side view of the device of Figure 5.

With reference to the figures, the reference numeral 1 generally designates a towing device for an agricultural or industrial vehicle according to the invention.

The device 1 comprises a fixed frame 2, which can be associated with an agricultural or industrial vehicle V, and a lower frame 3, which can move with respect to the fixed frame 2 and is provided with at least one hitching element 4 which can engage at least one engagement portion P of a towable vehicle.

In a preferred embodiment, the hitching element 4, preferably constituted by a body which is at least partially spherical in shape, is associated detachably with the lower frame 3 in order to allow interchangeability with hitching elements 4 having a different shape.

The device 1 further comprises at least one retention element 5, which is connected to the lower frame 3 and is adapted to cooperate with the hitching element 4 in order to keep the engagement portion P mated with the hitching element 4.

The retention element 5 can be formed monolithically with the lower frame 3 or preferably associated therewith detachably in order to allow its removal or replacement if needed.

Conveniently, the retention element 5 is locked with respect to the lower frame 3, for example by way of detachable fixing means 11.

In an alternative embodiment, the retention element 5 can move with respect to the lower frame 3 and the device 1 comprises means for adjusting the position of said retention element with respect to the hitching element 4, not shown in the figure, in order to recover any play caused by the wear of the retention element.

Conveniently, the retention element 5 is arranged above the hitching element 4 and mated with the engagement portion P, which is interposed between them, in order to prevent the lifting, during use, of said engagement portion with respect to the hitching element 4.

The device 1 is further provided with means for detachable locking of the lower frame 3 with respect to the fixed frame 2.

In the embodiment shown in the figures, the locking means are constituted by two hooks 6 which are hinged to a plate which is associated with the fixed frame 2 and are suitable to engage corresponding protrusions 7 formed on the lower frame 3.

The lower frame 3 can move with respect to the fixed frame 2 from at least one positioning configuration, in which it can move with respect to the fixed frame 2 and the hitching element 4 can be positioned at the engagement portion P at a lower level with respect to said portion, to an active configuration, in which it is locked with respect to the fixed frame 2 by the locking means and the hitching element 4 is positioned at a height which is suitable for engaging the engagement portion P and vice versa.

The movements of the lower frame 3 can be actuated by a first actuator, not shown in the figure, for example of the hydraulic or oleo type.

In a first embodiment, the lower frame 3 is associated with the fixed frame 2 by means of an articulated quadrilateral, not shown in the figure, which is pivoted to the fixed frame 2. More specifically, the fixed frame 2 and the lower frame 3 constitute opposite sides of the quadrilateral and the hitching element 4 is positioned, preferably detachably, at one end of the lower frame 3.

In a second embodiment, shown in the figures, the lower frame 3 is rotatably associated with the fixed frame 2 about a first rotation axis 8, with the retention element 5 associated with an end portion of the lower frame 3 which is distal with respect to the first rotation axis 8 and is locked with respect to it by way of the fixing means 11, for example two fixing screws.

Conveniently, the device 1 comprises means for supporting and guiding the lower frame 3 in the movements between the active configuration and the positioning configurations. The supporting and guiding means are constituted for example by two rods 15, which are pivoted to the lower frame 3 and are inserted slidingly within a hollow element 16, which in turn is pivoted to a plate 17 which can be associated with the vehicle V.

Advantageously, the device 1 comprises, in this embodiment, an extractable portion 9, which is slidingly associated with the lower frame 3 along a first path, indicated in the figure by the arrow d', which is substantially perpendicular to the first rotation axis 8.

The hitching element 4 is connected to the extractable portion 9 at a peripheral region thereof and is extended upward at right angles to the first path d'.

Preferably, the hitching element 4 is detachably associated with the extractable portion 9.

In an alternative embodiment, the hitching element 4 is formed monolithically with the extractable portion 9.

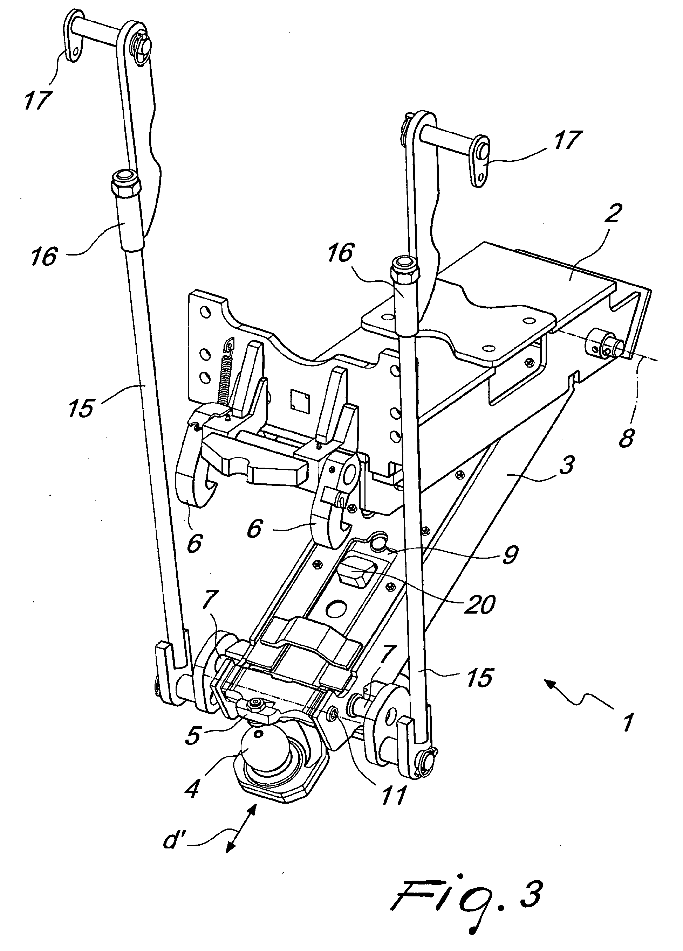

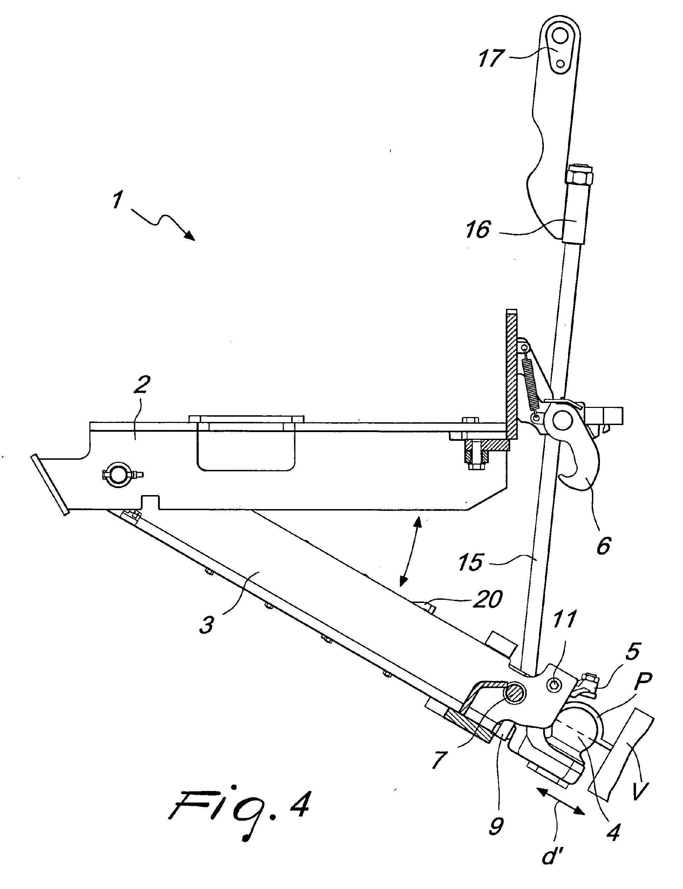

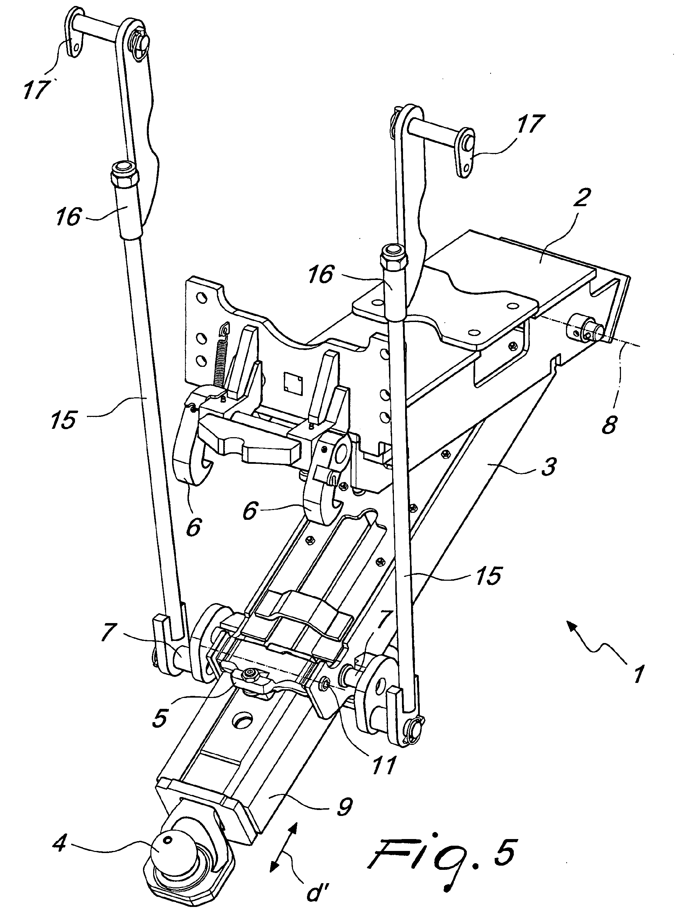

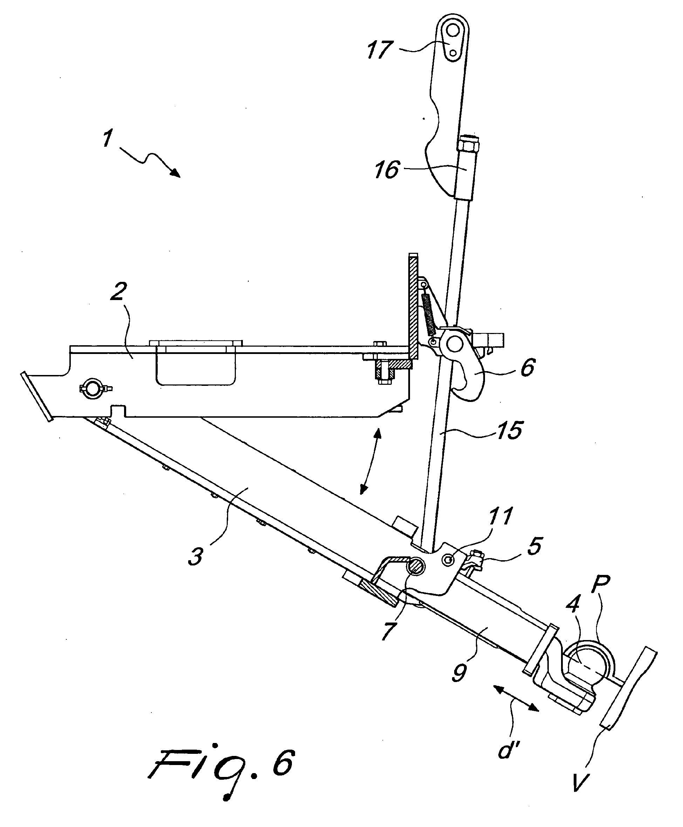

The extractable portion 9 can move with respect to the lower frame 3 between a retracted configuration, shown in Figures 3 and 4, in which the hitching element 4 is positioned so as to face the retention element 5, and at least one extended configuration, shown in Figures 5 and 6, in which the hitching element 4 is spaced from the retention element 5 with respect to the retracted configuration.

The extractable portion 9, which is contained at least partially in the lower frame 3, comprises a tooth 20, which protrudes from the upper surface of the lower frame 3 and of said extractable portion and is associated slidingly with the latter along a path which is substantially perpendicular to the first path d' and is provided with elastic means which are suitable to push it upward.

When the extractable portion 9 reaches the retracted configuration, with the lower frame 3 in the active configuration, the tooth 20 enters with a snap action, due to the thrust applied by the elastic means, a corresponding seat formed on the fixed frame 2, which is not visible in the figures.

Such seat forms an abutment which is suitable to prevent, unless the lower frame 3 is first rotated downward, the exit of the extractable portion 9, which therefore, when the lower frame 3 is in the active configuration, can move only from an extended configuration toward the retracted configuration and not vice versa.

The movements of the extractable portion 9 can be actuated by a second actuator, not shown in the figures, for example the hydraulic or oleo type.

Advantageously, the lower surface of the retention element 5, which is adapted to cooperate with the engagement portion P, does not have protrusions arranged along the first path d' in the direction for spacing the hitching element 4 from the retention element 5, which therefore does not retain the engagement portion P, mated with said hitching element, during the stroke of the extractable portion 9 from the retracted configuration to an extended configuration. This constructive solution allows to perform an automatic disengagement of the retention element 5 from the engagement portion P without acting on said retention element.

If the lower surface of the retention element 5 has such a shape as to interfere with the hitching element 4 during the stroke of the extractable portion 9 from the retracted configuration toward an extended configuration, and if the device 1 does not have the extractable portion 9, the retention element 5 constitutes a hindrance to the engagement or disengagement of the engagement portion P with respect to the hitching element 4.

Conveniently, the retention element 5 can therefore move during use with respect to the lower frame 3 from a first configuration, in which it contrasts the disengagement of the engagement portion P interposed between the hitching element 4 and the retention element, to a second configuration, in which it is spaced from the hitching element 4 with respect to the first configuration, in order to allow the disengagement of the engagement portion P from the hitching element 4.

Advantageously, the device 1 comprises means for actuating the movements of the retention element 5, not shown in the figure, preferably of a mechanical and/or hydraulic and/or pneumatic type.

The operation of the towing device of the present invention is as follows.

Initially, the towing device 1, associated with a vehicle V, is spaced from the engagement portion P of the vehicle to be towed with the lower frame 3 in the active configuration, i.e., with the hooks 6 engaged with the protrusions 7, and with the extractable portion 9 in the retracted configuration.

In order to disengage the hooks 6 from the protrusions 7, the lower frame 3, from the active configuration, performs an overtravel along the path defined by its approach to the fixed frame 2 during movement from a positioning configuration to the active configuration.

The retention element 5 does not change its position with respect to the hitching element 4 during the overtravel step of the lower frame 3, since both are associated with the lower frame and rotate jointly therewith. The simultaneous movement of the hitching element 4 and of the retention element 5 during the overtravel of the lower frame 3 causes the engagement portion P, optionally interposed between them, to not apply any extraordinary pressure to the retention element 5, causing its movement with respect to the hitching element 4.

In the embodiment shown in the figures, the retention element 5 is fixed with respect to the lower frame 3 and therefore with respect to the hitching element 4.

In an alternative embodiment, the position of the retention element 5 with respect to the hitching element 4, and in particular its height, can be adjusted by acting on the adjustment means, remaining in any case locked during the operation of the device 1 and suitable to ensure the engagement of the engagement portion P with said hitching element.

In order to engage the hitching element 4 with the engagement portion P, after performing the overtravel and therefore the disengagement from the locking means, the lower frame 3 rotates, with respect to the fixed frame 2, toward a positioning configuration, moving away from the fixed frame.

In order to position the hitching element 4 at the engagement portion P, at a lower level, the extraction of the extractable portion 9 is performed by means of the activation of the second actuator.

The engagement of the hitching element 4 with the engagement portion P occurs by turning the lower frame 3 toward the fixed frame 2, i.e., toward the active configuration.

When the hitching element 4 reaches a level which is suitable to engage the engagement portion P, the lower frame 3 and the extractable portion 9 are returned respectively to the active configuration and to the retracted configuration.

The movements of the lower frame 3 and of the extractable portion 9, once the engagement of the hitching element 4 with the engagement portion P has been performed, are mutually sequentially independent and reversible.

When the lower frame 3 and the extractable portion 9 reach respectively the active configuration and the retracted configuration, the tooth 20, by entering the seat formed on the fixed frame 2, prevents the extractable portion 9 from moving toward an extended configuration.

The extractable portion 9 can thus reach an extended configuration only after downward rotation of the lower frame 3.

In the retracted configuration, the engagement portion P is interposed between the hitching element 4 and the retention element 5, which prevent its disengagement.

The retention element 5 related to the embodiment shown in the figures is activated and deactivated automatically because its lower surface, without protrusions arranged along the first path d' in the direction for the spacing of the hitching element 4 from the retention element 5, does not interfere with the engagement portion P during the stroke of the hitching element 4 from an extracted configuration to the retracted configuration and vice versa.

As described above, in cases in which the retention element 5 has such a shape as to contrast the stroke of the extractable portion from the retracted configuration to an extended configuration, and in cases in which the device 1 does not have the extractable portion 9, in order to engage or disengage the hitching element 4 with respect to the engagement portion P one acts on the retention element by moving it, during the operation of the device 1, from the first configuration to the second configuration, for example by way of the actuation means, if the device 1 has them.

These actuation means allow to modify from a distance the position of the retention element 5 with respect to the hitching element 4, in practice activating or deactivating its operation.

In practice it has been found that the described invention achieves the proposed aim and objects, and in particular the fact is stressed that the position of the retention element with respect to the hitching element does not change during the overtravel of the lower frame.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A towing device for an agricultural or industrial vehicle, comprising:
- a fixed frame (2), which can be associated with an agricultural or industrial vehicle (V);
- a lower frame (3), which is rotatably associated with said fixed frame (2) about a first rotation axis (8);
- at least one hitching element (4), which is connected to said lower frame (3) and can engage at least one engagement portion (P) of a towable vehicle (V),
- at least one retention element (5), which is adapted to cooperate with said hitching element (4) in order to keep said engagement portion (P) mated with said hitching element (4),
said lower frame (3) being movable with respect to said fixed frame (2) from at least one positioning configuration, in which it can move with respect to said fixed frame (2) and said hitching element (4) can be positioned at said engagement portion (P) at a lower level than said engagement portion (P), to an active configuration, in which said hitching element (4) is positioned at a height which is suitable for mating with said engagement portion (P), and vice versa, and
- an extractable portion (9) which is associated slidingly with said lower frame (3) along at least one first path (d') which is substantially perpendicular to said first rotation axis (8), said hitching element (4) being associated with said extractable portion (9) at a peripheral region thereof, said extractable portion (9) being movable with respect to said lower frame (3) between a retracted and at least one extended configuration,
**characterized in that**:
it further comprises means (6, 7) for the detachable locking of said lower frame (3) with respect to said fixed frame (2) in said active configuration of said lower frame (3),
and **in that**
said retention element (5) is connected to said lower frame (3) and is provided associated with an end portion of said lower frame (3) which is distal with respect to said first rotation axis (8) so that upon movement of said extractable portion (9) with respect to said lower frame (3), in said retracted configuration, said hitching element (4) is positioned so as to face said retention element (5), and in said at least one extended configuration, said hitching element (4) is spaced from said retention element (5) with respect to said retracted configuration.

2. The device according to claim 1, **characterized in that** said lower frame (3) is associated with said fixed frame (2) by means of an articulated quadrilateral which is hinged to said fixed frame (2), said lower frame (3) and said fixed frame (2) constituting opposite sides of said quadrilateral, said hitching element (4) being positioned at one end of said lower frame (3).

3. The device according to claims 1 or 2, **characterized in that** said retention element (5) is connected detachably to said lower frame (3).

4. The device according to claims 1, 2 or 3, **characterized in that** said retention element (5) is locked with respect to said lower frame (3).

5. The device according to one or more of the preceding claims 1 to 3, **characterized in that** it comprises means for adjusting the position of said retention element (5) with respect to said hitching element (4).

6. The device according to one or more of the preceding claims, **characterized in that** said retention element (5) can move with respect to said lower frame (3) from a first configuration, in which it prevents the disengagement of the engagement portion (P) interposed between said hitching element (4) and said retention element (5), and a second configuration, in which it is spaced from said hitching element (4) with respect to said first configuration in order to allow the disengagement of the engagement portion (P).

7. The device according to claim 6, **characterized in that** it comprises means for actuating the movements of said retention element (5).

8. The device according to claim 7, **characterized in that** said actuation means are of the mechanical and/or hydraulic and/or pneumatic type.

9. The device according to one or more of the preceding claims, **characterized in that** said retention element (5) is arranged above said hitching element (4) and mated with said engagement portion (P), said engagement portion (P) being interposed between said hitching element (4) and said retention element (5), in order to prevent the lifting of said engagement portion (P) with respect to said hitching element (4).

10. The device according to one or more of the preceding claims, **characterized in that** said hitching element is constituted by a body which has an at least partially spherical shape and extends upward at right angles to said first direction.

11. The device according to one or more of the preceding claims, **characterized in that** said hitching element (4) is associated detachably with said lower frame (3) or with said extractable portion (P).

12. The device according to one or more of the preceding claims, **characterized in that** the lower surface of said retention element (5), which is suitable to cooperate with said engagement portion (P), does not have protrusions arranged along said first direction (d') in the direction for the spacing of said hitching element (4) from said retention element (5), said retention element (5) not retaining said engagement portion (P) during the stroke of said extractable portion (9) from said retracted configuration to said extended configuration.

13. The device according to one or more of the preceding claims, **characterized in that** it comprises means (15) for guiding the movements of said lower frame (3) from said active configuration to said positioning configuration and vice versa.

## Patentansprüche

1. Schleppvorrichtung für ein landwirtschaftliches oder industrielles Fahrzeug mit folgenden Merkmalen:
- einem festen Rahmen (2), der einem landwirtschaftlichen oder industriellen Fahrzeug (V) zugeordnet werden kann;
- einem unteren Rahmen (3), der dem festen Rahmen (2) um eine erste Drehachse (8) drehbar zugeordnet ist;
- mindestens einem Anhängekupplungselement (4), das mit dem unteren Rahmen (3) verbunden ist und an mindestens einem Angriffsabschnitt (P) eines schleppbaren Fahrzeuges (V) angreifen kann;
- mindestens einem Halteelement (5), das dazu ausgebildet ist, mit dem Anhängekupplungselement (4) zusammenzuarbeiten, um den Angriffsabschnitt (P) im Eingriff mit dem Anhängekupplungselement (4) zu halten,
wobei der untere Rahmen (3) gegenüber dem festen Rahmen (2) aus mindestens einer positionierenden Konfiguration, in der er sich gegenüber dem festen Rahmen (2) bewegen kann und in der das Anhängekupplungselement (4) auf einer gegenüber dem Angriffsabschnitt (P) niedrigeren Ebene an dem Angriffsabschnitt (P) positioniert werden kann, in eine aktive Konfiguration bewegbar ist, in der das Anhängekupplungselement (4) in einer Höhe positioniert ist, die für einen Eingriff an den Angriffsabschnitt (P) geeignet ist, und umgekehrt; und
- einem ausfahrbaren Abschnitt (9), der dem unteren Rahmen (3) entlang mindestens eines ersten Pfades (d'), der im Wesentlichen rechtwinklig zu der ersten Drehachse (8) verläuft, gleitend zugeordnet ist, wobei das Anhängekupplungselement (4) dem ausfahrbaren Abschnitt (9) an seinem Umfangsbereich zugeordnet ist und wobei der ausfahrbare Abschnitt (9) gegenüber dem unteren Rahmen (3) zwischen einer eingefahrenen und mindestens einer ausgefahrenen Konfiguration bewegbar ist;
**dadurch gekennzeichnet,**
**dass** die Schleppvorrichtung darüber hinaus Mittel (6, 7) zum lösbaren Verriegeln des unteren Rahmens (3) gegenüber dem festen Rahmen (2) in der aktiven Konfiguration des unteren Rahmens (3) aufweist und
**dass** das Halteelement (5) mit dem unteren Rahmen (3) verbunden und mit einem zugeordneten Endabschnitt des unteren Rahmens (3) versehen ist, der von der ersten Drehachse (8) entfernt ist, so dass bei einer Bewegung des ausfahrbaren Abschnittes (9) gegenüber dem unteren Rahmen (3) in der eingefahrenen Konfiguration das Anhängekupplungselement (4) so positioniert ist, dass es dem Halteelement (5) gegenüberliegt, und in der mindestens einen ausgefahrenen Konfiguration das Anhängekupplungselement (4) im Vergleich zu der eingefahrenen Konfiguration im Abstand gegenüber dem Halteelement (5) angeordnet ist.

2. Schleppvorrichtung nach Anspruch 1, **dadurch gekennzeichnet, dass** der untere Rahmen (3) dem festen Rahmen (2) über ein Gelenkviereck zugeordnet ist, das an dem festen Rahmen (2) angelenkt ist, wobei der untere Rahmen (3) und der feste Rahmen (2) die einander gegenüberliegenden Seiten des Gelenkvierecks bilden und das Anhängekupplungselement (4) an einem Ende des unteren Rahmens (3) positioniert ist.

3. Schleppvorrichtung nach Anspruch 1 oder 2, **dadurch gekennzeichnet, dass** das Halteelement (5) abnehmbar an dem unteren Rahmen (3) befestigt ist.

4. Schleppvorrichtung nach Anspruch 1, 2 oder 3, **dadurch gekennzeichnet, dass** das Halteelement (5) gegenüber dem unteren Rahmen (3) verriegelt ist.

5. Schleppvorrichtung nach einem oder mehreren der Ansprüche 1 bis 3, **gekennzeichnet durch** Mittel zum Einstellen der Position des Halteelements (5) gegenüber dem Anhängekupplungselement (4).

6. Schleppvorrichtung nach einem oder mehreren der vorhergehenden Ansprüche, **dadurch gekennzeichnet, dass** das Halteelement (5) sich gegenüber dem unteren Rahmen (3) aus einer ersten Konfiguration, in der es das Lösen des zwischen dem Anhängekupplungselement (4) und dem Halteelement (5) liegenden Angriffsabschnitts (P) verhindert, in eine zweite Konfiguration bewegen kann, in der es sich von dem Anhängekupplungselement (4) gegenüber der ersten Konfiguration im Abstand befindet, um ein Lösen des Angriffsabschnitts (P) zu ermöglichen.

7. Schleppvorrichtung nach Anspruch 6, **gekennzeichnet durch** Mittel zum Betätigen der Bewegungen des Halteelements (5).

8. Schleppvorrichtung nach Anspruch 7, **dadurch gekennzeichnet, dass** die Betätigungsmittel von der mechanischen und/oder hydraulischen und/oder pneumatischen Art sind.

9. Schleppvorrichtung nach einem oder mehreren der vorhergehenden Ansprüche, **dadurch gekennzeichnet, dass** das Halteelement (5) oberhalb des Anhängekupplungselementes (4) angeordnet und im Eingriff mit dem Angriffsabschnitt (P) ist, und dass der Angriffsabschnitt (P) zwischen dem Anhängekupplungselement (4) und dem Halteelement (5) angeordnet ist, um ein Abheben des Angriffsabschnitts (P) gegenüber dem Anhängekupplungselement (4) zu verhindern.

10. Schleppvorrichtung nach einem oder mehreren der vorhergehenden Ansprüche, **dadurch gekennzeichnet, dass** das Anhängekupplungselement durch einen Körper gebildet wird, der zumindest teilweise eine Kugelform hat und sich im rechten Winkel in der ersten Richtung nach oben erstreckt.

11. Schleppvorrichtung nach einem oder mehreren der vorhergehenden Ansprüche, **dadurch gekennzeichnet, dass** das Anhängekupplungselement (4) dem unteren Rahmen (3) oder dem ausfahrbaren Abschnitt (P) abnehmbar zugeordnet ist.

12. Schleppvorrichtung nach einem oder mehreren der vorhergehenden Ansprüche, **dadurch gekennzeichnet, dass** die untere Fläche des Halteelements (5), die geeignet ist, mit dem Angriffsabschnitt (P) zusammen zu wirken, keine Vorsprünge entlang der ersten Richtung (d') in Richtung des Abstandes des Anhängekupplungselements (4) von dem Halteelement (5) aufweist, und dass das Halteelement (5) den Angriffsabschnitt (P) während des Hubes des ausfahrbaren Abschnitts (9) aus der eingefahrenen Konfiguration in die ausgefahrenen Konfiguration nicht festhält.

13. Schleppvorrichtung nach einem oder mehreren der vorhergehenden Ansprüche, **gekennzeichnet durch** Mittel (15) zum Führen der Bewegungen des unteren Rahmens (3) aus der aktiven Konfiguration in die positionierende Konfiguration, und umgekehrt.

## Revendications

1. Dispositif de remorquage pour véhicule agricole ou industriel, comprenant :
- un châssis fixe (2), qui peut être associé à un véhicule agricole ou industriel (V) ;
- un châssis inférieur (3), qui est associé à rotation audit châssis fixe (2) autour d'un premier axe de rotation (8) ;
- au moins un élément d'attelage (4), qui est raccordé audit châssis inférieur (3) et peut s'engager sur au moins une partie d'engagement (P) d'un véhicule remorquable (V),
- au moins un élément de retenue (5) , qui est adapté pour coopérer avec ledit élément d'attelage (4) pour maintenir ladite partie d'engagement (P) accouplée avec ledit élément d'attelage (4),
ledit châssis inférieur (3) étant mobile par rapport audit châssis fixe (2) d'au moins une configuration de positionnement, dans laquelle il peut se déplacer par rapport audit châssis fixe (2) et ledit élément d'attelage (4) peut être positionné sur ladite partie d'engagement (P) à un niveau inférieur à celui de ladite partie d'engagement (P), à une configuration active, dans laquelle ledit élément d'attelage (4) est positionné à une hauteur qui convient à un accouplement avec ladite partie d'engagement (P), et vice versa, et
- une partie extensible (9) qui est associée à coulissement audit châssis inférieur (3) le long d'au moins un premier trajet (d') qui est sensiblement perpendiculaire audit premier axe de rotation (8), ledit élément d'attelage (4) étant associé à ladite partie extensible (9) dans sa région périphérique, ladite partie extensible (9) étant mobile par rapport audit châssis inférieur (3) entre une configuration rétractée et au moins une configuration déployée,
**caractérisé en ce que** :
il comprend en outre des moyens (6, 7) pour le verrouillage amovible dudit châssis inférieur (3) par rapport audit châssis fixe (2) dans ladite configuration active dudit châssis inférieur (3),
et **en ce que** ledit élément de retenue (5) est raccordé audit châssis inférieur (3) et est aménagé associé à une partie d'extrémité dudit châssis inférieur (3) qui est distale par rapport audit premier axe de rotation (8) de sorte que, lors d'un déplacement de ladite partie extensible (9) par rapport audit châssis inférieur (3), dans ladite configuration rétractée, ledit élément d'attelage (4) soit positionné de manière à faire face audit élément de retenue (5) et que, dans ladite au moins une configuration déployée, ledit élément d'attelage (4) soit espacé dudit élément de retenue (5) par rapport à ladite configuration rétractée.

2. Dispositif selon la revendication 1, **caractérisé en ce que** ledit châssis inférieur (3) est associé audit châssis fixe (2) à l'aide d'un quadrilatère articulé sur ledit châssis fixe (2), ledit châssis inférieur (3) et ledit châssis fixe (2) constituant des cotés opposés dudit quadrilatère, ledit élément d'attelage (4) étant positionné à une extrémité dudit châssis inférieur (3).

3. Dispositif selon la revendication 1 ou 2, **caractérisé en ce que** ledit élément de retenue (5) est raccordé de manière amovible audit châssis inférieur (3).

4. Dispositif selon la revendication 1, 2 ou 3, **caractérisé en ce que** ledit élément de retenue (5) est verrouillé par rapport audit châssis inférieur (3).

5. Dispositif selon une ou plusieurs des revendications 1 à 3, **caractérisé en ce qu'**il comprend des moyens pour ajuster la position dudit élément de retenue (5) par rapport audit élément d'attelage (4).

6. Dispositif selon une ou plusieurs des revendications précédentes, **caractérisé en ce que** ledit élément de retenue (5) peut se déplacer par rapport audit châssis inférieur (3) d'une première configuration, dans laquelle il empêche le dégagement de la partie d'engagement (P) intercalé entre ledit élément d'attelage (4) et ledit élément de retenue (5) , à une seconde configuration, dans laquelle il est espacé dudit élément d'attelage (4) par rapport à ladite première configuration afin de permettre le dégagement de la partie d'engagement (P).

7. Dispositif selon la revendication 6, **caractérisé en ce qu'**il comprend des moyens pour actionner les déplacements dudit élément de retenue (5).

8. Dispositif selon la revendication 7, **caractérisé en ce que** lesdits moyens d'actionnement sont de type mécanique et/ou hydraulique et/ou pneumatique.

9. Dispositif selon une ou plusieurs des revendications précédentes, **caractérisé en ce que** ledit élément de retenue (5) est aménagé au-dessus dudit élément d'attelage (4) et accouplés à ladite partie d'engagement (P), ladite partie d'engagement (P) étant intercalée entre ledit élément d'attelage (4) et ledit élément de retenue (S) pour empêcher le soulèvement de ladite partie d'engagement (P) par rapport audit élément d'attelage (4).

10. Dispositif selon une ou plusieurs des revendications précédentes, **caractérisé en ce que** ledit élément d'attelage est constitué d'un corps qui a au moins une forme partiellement sphérique et s'étend vers le haut à angles droits dans ladite première direction.

11. Dispositif selon une ou plusieurs des revendications précédentes, **caractérisé en ce que** ledit élément d'attelage (4) est associé de manière amovible audit châssis inférieur (3) ou à ladite partie extensible (P).

12. Dispositif selon une ou plusieurs des revendications précédentes, **caractérisé en ce que** la surface inférieure dudit élément de retenue (5), qui convient une coopération avec ladite partie d'engagement (P), n'a pas de saillies aménagées le long de ladite première direction (d') dans la direction de l'espacement dudit élément d'attelage (4) avec ledit élément de retenue (5), ledit élément de retenue (5) ne retenant pas ladite partie d'engagement (P) pendant la course de ladite partie extensible (9) de ladite configuration rétractée à ladite configuration déployée.

13. Dispositif selon une ou plusieurs des revendications précédentes, **caractérisé en ce qu'**il comprend des moyens (15) pour guider les déplacements dudit châssis inférieur (3) de ladite configuration active à ladite configuration de positionnement et vice et versa.
